# EUROPÄISCHE PATENTSCHRIFT

(11) **EP 1 629 231 B1**
(45) Veröffentlichungstag und Bekanntmachung des Hinweises auf die Patenterteilung: **16.04.2008**
(21) Anmeldenummer: 04733543.5
(22) Anmeldetag: 18.05.2004
(51) Int. Cl.: F21S 8/10, F21Y 105/00

(54) **SCHEINWERFER ODER LEUCHTE FÜR EIN KRAFTFAHREUG**
HEADLIGHT OR LIGHT FOR A MOTOR VEHICLE
BLOC OPTIQUE OU PHARE POUR VEHICULE A MOTEUR

(30) Priorität: 23.05.2003 DE 10323321; 29.01.2004 DE 102004004398
(43) Veröffentlichungstag der Anmeldung: 01.03.2006
(73) Patentinhaber: Volkswagen Aktiengesellschaft, 38436 Wolfsburg (DE)
(72) Erfinder: MÜLLER, Michael, 38518 Gifhorn (DE); ORTMANN, Frank, 38518 Gifhorn (DE); SCHELLENBERG, Reiner, 38179 Gross Schwülper (DE); MÖSSNER, Malte, 38100 Braunschweig (DE)
(74) Vertreter: Kiriczi, Sven Bernhard
(86) Internationale Anmeldenummer: PCT/EP2004/005312
(87) Internationale Veröffentlichungsnummer: WO 2004/104474

(56) Entgegenhaltungen:
- EP-A- 1 070 971
- EP-A- 1 201 497
- WO-A-02/079001
- DE-A- 4 332 209
- DE-A- 10 065 020
- DE-A- 19 914 081
- FR-A- 1 295 410
- US-B1- 6 561 679
- PATENT ABSTRACTS OF JAPAN Bd. 2002, Nr. 07, 3. Juli 2002 (2002-07-03) -& JP 2002 083507 A (STANLEY ELECTRIC CO LTD), 22. März 2002 (2002-03-22)
- PATENT ABSTRACTS OF JAPAN Bd. 2003, Nr. 05, 12. Mai 2003 (2003-05-12) -& JP 2003 007111 A (TOYOTA AUTO BODY CO LTD), 10. Januar 2003 (2003-01-10)

## Beschreibung

Die Erfindung betrifft einen Scheinwerfer oder eine Leuchte für ein Kraftfahrzeug mit mindestens einem Leuchtmittel und mindestens einem Reflektor zum Reflektieren von mittels des Leuchtmittels erzeugbaren Lichtes.

Ein derartiger Scheinwerfer ist z.B. aus der DE 100 33 766 A1, der DE 100 52 653 A1 der DE 101 18 687 A1 und der DE 198 29 586 A1 bekannt. Dabei werden gemäß der DE 100 33 766 A1, der DE 100 52 653 A1 und der DE 198 29 586 A1 Glühlampen als Leuchtmittel verwendet. Aus der DE 101 18 687 A1 ist zudem der Einsatz von Gasentladungslampen bekannt.

Die DE 100 52 653 A1 und die EP 1 201 497 A2 offenbaren jeweils eine Beleuchtungsanordnung für Kraftfahrzeuge mit mindestens zwei Leuchten, Reflektoren sowie einem Gehäuse oder Trägerteil in oder auf welchem die Leuchten angeordnet sind, wobei das Träger-oder Gehäuseteil der ersten Leuchte derart ausgestaltet ist, dass es auf mindestens einem Flächensegment integral den Reflektorgrundkörper einer mindestens weiteren Leuchte oder den Reflektor aller Leuchten bildet.

Die JP 2002-83507 A offenbart einen Scheinwerfer mit einer Glühbirne, einem Reflektor zum Reflektieren von mittels der Glühbirne erzeugbarem Licht, sowie einem elektrolumineszierenden Chip.

Die FR 1 295 410 offenbart einen Scheinwerfer für Kraftfahrzeuge mit einem parabolförmigen Körper, der elektrolumineszierendes Material umfasst.

Wegen des starken Einflusses des Fahrzeugdesigns auf das Image eines Kraftfahrzeugs unterliegen Kraftfahrzeugscheinwerfer heute stärker als bisher Einflüssen des Designs. Daher sind bei der Konstruktion und Gestaltung von Scheinwerfern für Kraftfahrzeuge entsprechende Randbedingungen zu berücksichtigen. Aufgrund der Freiformflächentechnologie bei modernen Fahrzeugscheinwerfern können herkömmlich strukturierte Abdeck- oder Streuscheiben durch Abdeckscheiben aus Klarglas ersetzt werden. Damit tritt jedoch auch die Notwendigkeit auf, das Innenleben des Scheinwerfers nach designtechnischen Kriterien zu gestalten, wodurch wiederum lichttechnische Probleme auftreten, z.B. eine durch abgelenkte Lichtanteile verursachte sogenannte Eigenblendung eines Fahrers des Kraftfahrzeuges.

Es ist Aufgabe der Erfindung, die Aufnahme von gestalterischen Elementen in einen Scheinwerfer oder einer Leuchte eines Kraftfahrzeugs zu ermöglichen, die z.B. eine Herkunftsfunktion erfüllen können, ohne dabei die Sicherheit beim Betrieb eines Kraftfahrzeuges zu verringern. Insbesondere ist es wünschenswert, die Aufnahme von gestalterischen Elementen in einen Scheinwerfer oder eine Leuchte eines Kraftfahrzeugs zu ermöglichen, ohne dass es zu der vorgenannten Eigenblendung kommt.

Vorgenannte Aufgabe wird durch einen Scheinwerfer oder eine Leuchte für ein Kraftfahrzeug bzw. durch ein Kraftfahrzeug mit den Merkmalen der unabhängigen Ansprüche gelöst. Vorteilhafte Ausgestaltungen der Erfindung sind den Unteransprüchen entnehmbar. Die elektrolumineszierende Schicht kann insbesondere in vorteilhafter Weise unabhängig von einem Fern-, Abblend- und/oder Parklicht ein- und/oder ausschaltbar sein.

Ein Leuchtmittel im Sinne der Erfindung ist insbesondere eine übliche Glühbirne für einen Scheinwerfer oder eine Leuchte für ein Kraftfahrzeug. Ein Leuchtmittel im Sinne der Erfindung kann z.B. auch eine Halogenleuchte, eine Xenonleuchte oder eine Anzahl von Leuchtdioden sein.

In vorteilhafter Ausgestaltung der Erfindung ist die elektrolumineszierende Schicht mit dem Reflektor verbunden und insbesondere auf dem Reflektor angeordnet.

In weiterhin vorteilhafter Ausgestaltung der Erfindung umfasst der Reflektor eine reflektierende Schicht, wobei die elektrolumineszierende Schicht unter der reflektierenden Schicht angeordnet ist. Dabei ist die reflektierende Schicht vorteilhafterweise, z.B. durch einen Metallanteil, als venezianischer Spiegel ausgebildet, der von der elektrolumineszierenden Schicht erzeugtes Licht passieren lässt und von dem Leuchtmittel erzeugtes Licht reflektiert. Die reflektierende Schicht besteht dabei vorteilhafterweise im wesentlichen aus einer zumindest teiltransparenten Schicht aus Metall.

In weiterhin vorteilhafter Ausgestaltung der Erfindung umfasst der Scheinwerfer oder die Leuchte mindestens eine Blende, wobei die elektrolumineszierende Schicht mit der Blende verbunden ist. Die elektrolumineszierende Schicht ist dabei vorteilhafterweise auf der Blende angeordnet.

In weiterhin vorteilhafter Ausgestaltung der Erfindung umfasst der Scheinwerfer oder die Leuchte eine Haltevorrichtung zum Halten des mindestens einen Leuchtmittels, wobei die elektrolumineszierende Schicht mit der Haltevorrichtung verbunden ist, und wobei die elektrolumineszierende Schicht vorteilhafterweise auf der Haltevorrichtung angeordnet ist.

In weiterhin vorteilhafter Ausgestaltung der Erfindung umfasst der Scheinwerfer oder die Leuchte eine Linse zum Sammeln oder Streuen des mittels des Leuchtmittels erzeugbaren Lichtes sowie eine Linsenhalterung zum Halten der Linse, wobei die elektrolumineszierende Schicht mit der Linsenhalterung verbunden ist. Die elektrolumineszierende Schicht ist dabei vorteilhafterweise auf der Linsenhalterung angeordnet.

In weiterhin vorteilhafter Ausgestaltung der Erfindung umfasst die elektrolumineszierende Schicht eine Schichtfolge, wobei mindestens eine der Schichten eine durch Aufspritzen, Sputtern, Aufstreichen oder ein Siebdruckverfahren aufgebrachte Schicht ist.

In weiterhin vorteilhafter Ausgestaltung der Erfindung ist die elektrolumineszierende Schicht zumindest bereichsweise mit einem Krümmungsradius von weniger als 10cm gekrümmt.

In weiterhin vorteilhafter Ausgestaltung der Erfindung umfasst die elektrolumineszierende Schicht als Einheit eine Fläche von mehr als 1mm². Die elektrolumineszierende Schicht ist dabei insbesondere flächig ausgebildet. Eine derartige Ausgestaltung ist einer Ausgestaltung mit einer Anzahl von Punktquellen vorzuziehen, wie sie die DE 101 33 869 A1 mit Verweis auf als "Weißlicht emittierende Dioden" oder "Weiß-LEDs" vom sogenannten "Quantenwall-Laser"-Typ, "Diodenlaser"-Typ oder "Quantenpunkt"-Typ u.a. unter Bezugnahme auf Hummel & Guenther, "Thin films for optical coatings", Vol. 1, C.R.C. Press offenbart.

Die elektrolumineszierende Schicht im Sinne der Erfindung weist vorteilhafterweise eine Pigmentschicht auf, die vorteilhafterweise zwischen zwei Elektrodenschichten angeordnet ist, von denen zumindest eine zumindest teiltransparent ist. Die Pigmentschicht weist in weiterhin vorteilhafter Ausgestaltung der Erfindung ZnS, ZnSe und/oder ZnS/CdS auf. Die Pigmentschicht besteht vorteilhafterweise aus metalldotiertem ZnS, ZnSe und/oder ZnS/CdS.

In weiterhin vorteilhafter Ausgestaltung der Erfindung umfasst der Scheinwerfer oder die Leuchte einen transparenten oder teiltransparenten Träger mit einer Sichtseite, wobei die elektrolumineszierende Schicht auf einer der Sichtseite abgewandten Seite, also im Sinne der Erfindung insbesondere unterhalb, des Trägers angeordnet ist. Der Träger kann z.B. Teil eines Reflektors oder einer Blende sein. In weiterhin vorteilhafter Ausgestaltung der Erfindung ist zwischen dem Träger und der elektrolumineszierenden Schicht eine zumindest teiltransparente im wesentlichen aus Metall bestehende Schicht angeordnet.

In weiterhin vorteilhafter Ausgestaltung der Erfindung umfasst das Metall, insbesondere aufgedampftes, Aluminium oder Chrom. Vorteilhafterweise besteht das Metall im wesentlichen aus aufgedampftem Aluminium.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: eine Vorderansicht eines Kraftfahrzeuges,
- Fig. 2: eine Seitenansicht eines Kraftfahrzeuges,
- Fig. 3: einen Querschnitt durch ein Ausführungsbeispiel eines Scheinwerfers,
- Fig. 4: einen Querschnitt durch ein weiteres Ausführungsbeispiel eines Scheinwerfers,
- Fig. 5: einen Querschnitt durch ein weiteres Ausführungsbeispiel eines Scheinwerfers,
- Fig. 6: einen Querschnitt durch ein weiteres Ausführungsbeispiel eines Scheinwerfers,
- Fig. 7: einen Querschnitt durch ein weiteres Ausführungsbeispiel eines Scheinwerfers,
- Fig. 8: einen Querschnitt durch eine elektrolumineszierende Schicht als Ausführungsbeispiel für eine Leuchtschicht,
- Fig. 9: einen Querschnitt durch ein weiteres Ausführungsbeispiel einer Leuchtschicht,
- Fig. 10: einen Querschnitt durch ein weiteres Ausführungsbeispiel einer Leuchtschicht in einem Scheinwerfer und
- Fig. 11: einen Querschnitt durch ein weiteres Ausführungsbeispiel eines Scheinwerfers.

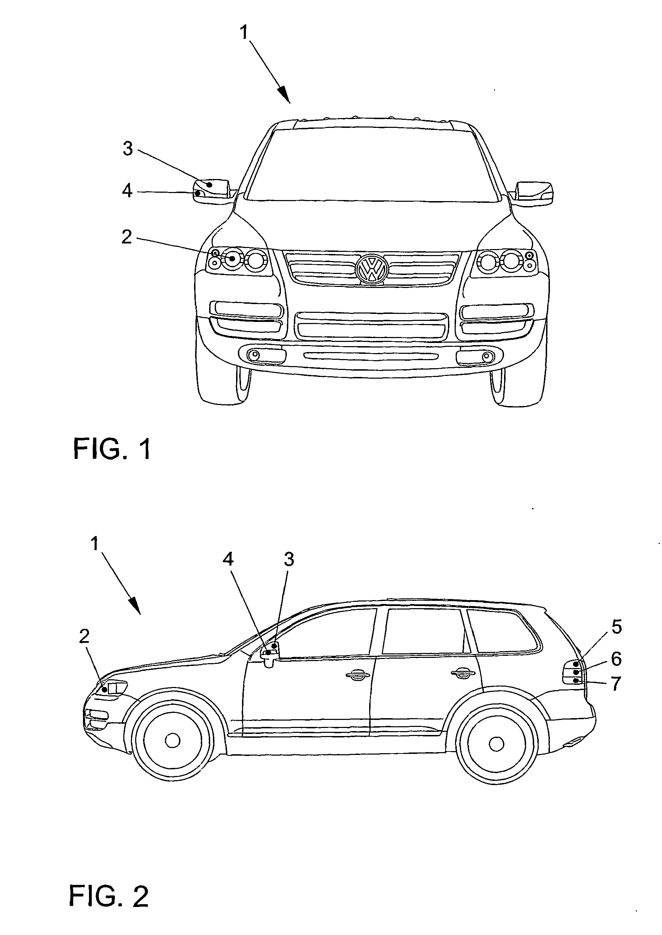

Fig. 1 zeigt eine Vorderansicht eines Kraftfahrzeuges 1. Dabei bezeichnet Bezugszeichen 2 einen Scheinwerfer und Bezugszeichen 3 einen Seitenspiegel mit einem Fahrtrichtungsanzeiger 4. Fig. 2 zeigt eine Seitenansicht einer beispielhaften Ausgestaltung des Kraftfahrzeuges 1. Das Kraftfahrzeug 1 weist am Heck eine Rückleuchte 5, ein Bremslicht 6 und einen Fahrtrichtungsanzeiger 7 auf.

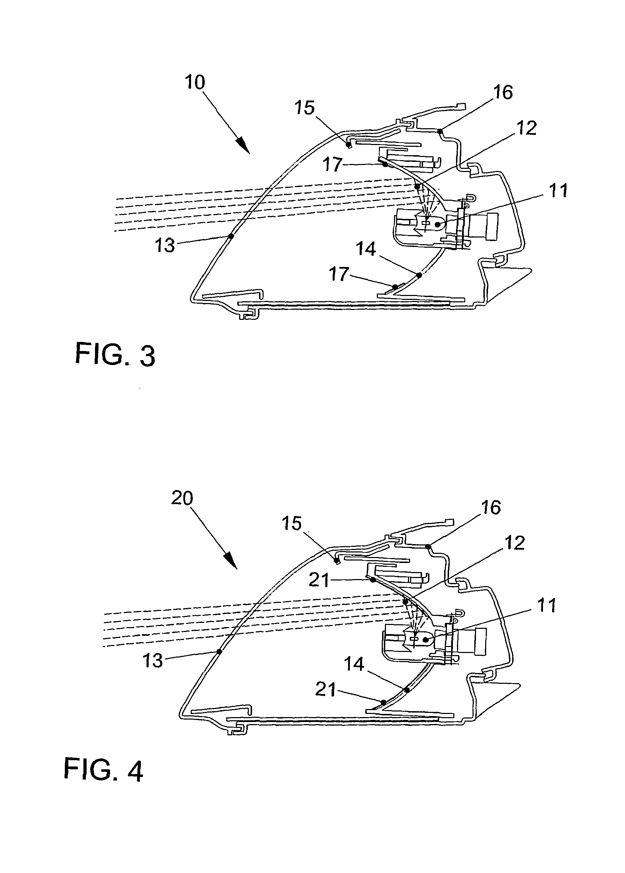

Fig. 3 zeigt einen Querschnitt durch ein Ausführungsbeispiel eines Scheinwerfers 10, der als Scheinwerfer 2 des Kraftfahrzeuges 1 verwendbar ist. Der Scheinwerfer 10 weist ein Gehäuse 16 auf, das mit einer Abdeckscheibe 13 verschlossen ist. In dem Gehäuse 16 sind ein Leuchtmittel 11 und ein Reflektor 14 zum Reflektieren von mittels des Leuchtmittels 11 erzeugbarem Licht 12 vorgesehen. Auf dem Reflektor 14 ist an dessen Rand eine eine elektrolumineszierende Schicht aufweisende Leuchtschicht 17 angeordnet. Im oberen Bereich des Reflektors 14 weist der Scheinwerfer 10 eine Blende 15 auf.

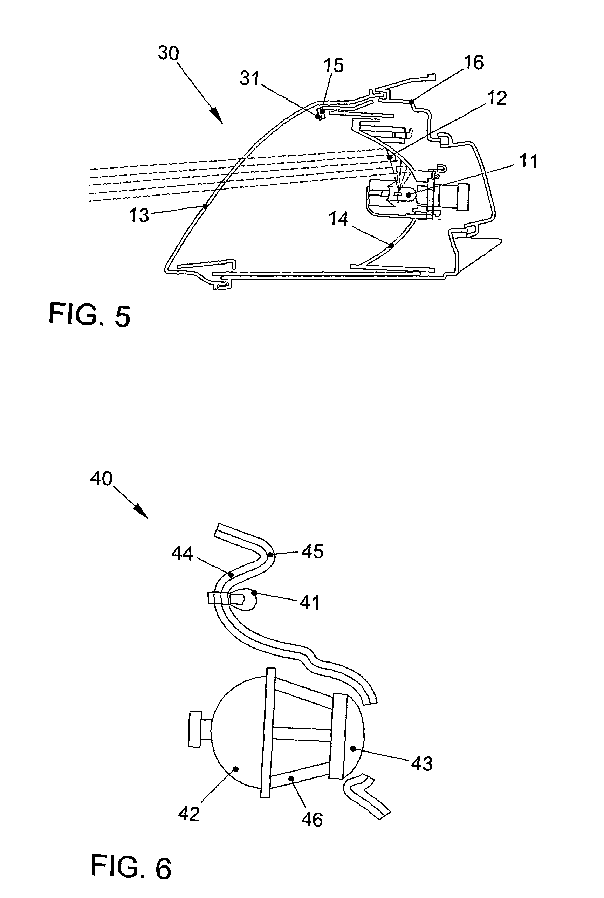

Fig. 4 und Fig. 5 zeigen Querschnitte durch weitere Ausführungsbeispiele von Scheinwerfern 20 und 30, die als Scheinwerfer 2 des Kraftfahrzeuges 1 verwendbar sind. Dabei bezeichnen gleiche Bezugszeichen mit Elementen aus Fig. 3 gleiche Elemente. Der Scheinwerfer 20 gemäß Fig. 4 weist eine eine elektrolumineszierende Schicht aufweisende Leuchtschicht 21 auf, die im wesentlichen auf dem gesamten Reflektor 14 angeordnet ist. Der Scheinwerfer 30 gemäß Fig. 5 weist eine eine elektrolumineszierende Schicht aufweisende Leuchtschicht 31 auf, die auf der Blende 15 angeordnet ist.

Es kann auch vorgesehen sein, dass die Blenden 15 der Scheinwerfer 10 und 20 gemäß Fig. 3 und Fig. 4 eine der Leuchtschicht 31 entsprechende Leuchtschicht aufweisen.

Fig. 6 zeigt einen Querschnitt durch ein weiteres Ausführungsbeispiel eines Scheinwerfers 40, der als Scheinwerfer 2 des Kraftfahrzeuges 1 verwendbar ist. Der Scheinwerfer 40 weist eine Haltevorrichtung 44 auf, in der ein Leuchtmittel 41 angeordnet ist. In der Haltevorrichtung 44 ist zudem eine Linsenhalterung 46 zum Halten einer Linse 43 vorgesehen, mittels der Licht gebündelt werden kann, das mittels eines nicht dargestellten Leuchtmittels erzeugbar und mittels eines Reflektors 42 auf die Linse 43 reflektierbar ist.

Auf der Haltevorrichtung 44 ist eine eine elektrolumineszierende Schicht aufweisende Leuchtschicht 45 angeordnet, die sich über den gesamten dargestellten Bereich der Haltevorrichtung 44 erstreckt. Es kann auch vorgesehen sein, dass die Leuchtschicht 45 nur in einem, z.B. ringförmigen, Bereich um das Leuchtmittel 41 und/oder um die Linsenhalterung 46 auf der Haltevorrichtung 44 angeordnet ist.

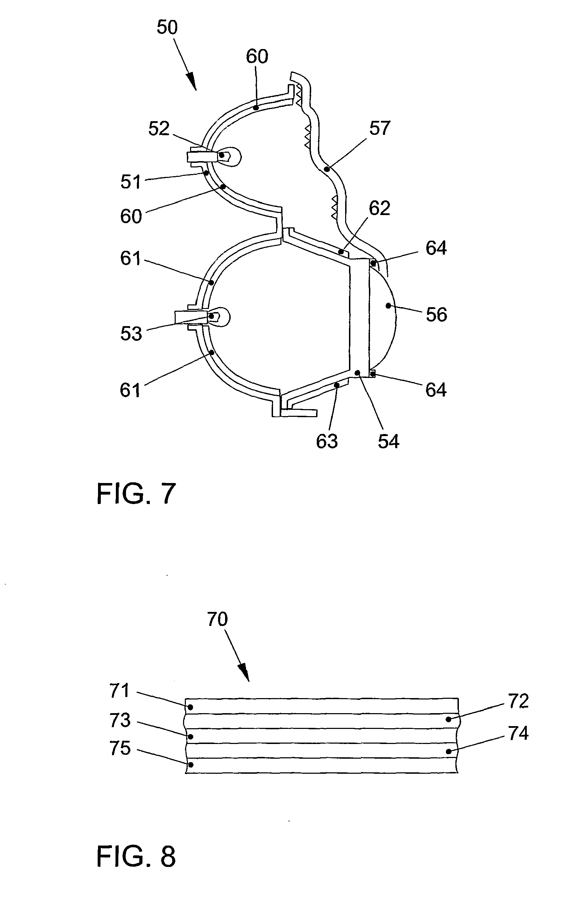

Fig. 7 zeigt einen Querschnitt durch ein weiteres Ausführungsbeispiel eines Scheinwerfers 50, der als Scheinwerfer 2 des Kraftfahrzeuges 1 verwendbar ist. Der Scheinwerfer 50 weist eine Abdeckscheibe 57 und einen Reflektor 51 auf, der zumindest einen Teil eines Gehäuses bildet. In dem Reflektor 51 sind Leuchtmittel 52 und 53 angeordnet. Im Bereich des Leuchtmittels 53 ist auf dem Reflektor 51 eine Linsenhalterung 54 zum Halten einer Linse 56 angeordnet, mittels der Licht gebündelt werden kann, das mittels des Leuchtmittels 53 erzeugbar und mittels des Reflektors 51 auf die Linse 56 reflektierbar ist.

Im Bereich des Leuchtmittels 52 ist auf dem Reflektor 51 eine eine elektrolumineszierende Schicht aufweisende Leuchtschicht 60 angeordnet, die sich über den gesamten gekrümmten Bereich um das Leuchtmittel 52 erstreckt. Es kann aber auch vorgesehen sein, dass die Leuchtschicht 60 nur in einem ringförmigen Bereich am Rand des gekrümmten Bereichs des Reflektors 51 um das Leuchtmittel 52 angeordnet ist. Im Bereich des Leuchtmittels 53 ist auf dem Reflektor 51 eine eine elektrolumineszierende Schicht aufweisende Leuchtschicht 61 angeordnet, die sich - in analoger Weise wie die Leuchtschicht 60 - über den gesamten gekrümmten Bereich um das Leuchtmittel 53 erstreckt. Es kann aber auch vorgesehen sein, dass die Leuchtschicht 61 nur in einem ringförmigen Bereich am Rand des gekrümmten Bereichs des Reflektors 51 um das Leuchtmittel 53 angeordnet ist.

Auf der Linsenhalterung 54 sind jeweils eine elektrolumineszierende Schicht aufweisende Leuchtschichten 62, 63 und 64 angeordnet. Es kann vorgesehen sein, nur eine Auswahl oder eine einzelne der eine elektrolumineszierende Schicht aufweisenden Leuchtschichten 60, 61, 62, 63 und 64 vorzusehen.

Die Leuchtmittel 11, 41, 52 und 53 können eine übliche Glühbirne für einen Scheinwerfer für ein Kraftfahrzeug sein. Die Leuchtmittel 11, 41, 52 und 53 können z.B. auch eine Halogenbirne oder eine Xenonbirne sein

Fig. 8 zeigt einen Querschnitt durch ein mögliches Ausführungsbeispiel einer elektrolumineszierenden Schicht 70, gemäß der die Leuchtschichten 17, 21, 31, 45, 60, 61, 62, 63 und 64 ausgestaltet werden können. Die elektrolumineszierende Schicht 70 weist dabei eine transparente Elektrode 71, eine transparente Isolationsschicht 72, eine Licht emittierende Schicht (Pigmentschicht) 73, eine weitere Isolationsschicht 74 und eine Rückelektrode 75 auf.

Die Licht emittierende Schicht (Pigmentschicht) 73 kann aus einem Material gebildet sein, bei dem Zinksulfid (ZnS) als das Basismaterial verwendet ist und dem eine geringe Menge eines Licht emittierenden Kerns (Mn) zugegeben ist. Licht wird mittels der Licht emittierenden Schicht (Pigmentschicht) 73 durch Anlegen eines elektrischen Wechselfeldes über die transparente Elektrode 71 und die Rückelektrode 74, die in nicht dargestellter Weise mit nicht dargestellten elektrischen Kontakten verbunden sind, unter Verwendung einer nicht dargestellten Energiequelle emittiert. Um mit dieser elektrolumineszierenden Schicht eine Lichtemissionsluminanz von 70 cd/m² oder mehr zu erreichen, beträgt die Mn-Konzentration z.B. etwa 0.4-0.6 Gew.-% (gegenüber dem Zinksulfid). Eine derartige elektrolumineszierende Schicht kann z.B. mittels eines Vakuumabscheidungsverfahrens, mittels Atomschichtkristallzüchtung (ALE), mittels chemischer Dampfabscheidung oder mittels Sputtern erzeugt werden. Nähere Einzelheiten zur beispielhaften Herstellung einer solchen elektrolumineszierenden Schicht können der DE 43 32 209 A1 entnommen werden.

Die Pigmentschicht 73 kann zudem ZnSe und/oder ZnS/CdS aufweisen oder im wesentlichen aus ZnSe und/oder ZnS/CdS bestehen. Sofern die Pigmentschicht 73 im wesentlichen aus ZnS, ZnSe und/oder ZnS/CdS besteht, schließt dies nicht aus, dass kleine Mengen (im Prozentbereich) anderer Elemente wie etwa 0.4-0.6 Gew.-% Mn vorgesehen sind, d.h. z.B. dass die Pigmentschicht 73 metalldotiert ist.

Weitere mögliche Ausgestaltungen der elektrolumineszierenden Schichten 70 können der EP 0 699 730 B1 entnommen werden.

Bei einer Ausgestaltung der Leuchtschichten 17, 21, 60 und 61 als vorgenannte elektrolumineszierenden Schicht 70 sind auch die weitere Isolationsschicht 74 und die Rückelektrode 75 transparent.

In den Ausführungsbeispielen gemäß Fig. 3, Fig. 4 und Fig. 7 sind die elektrolumineszierenden Schichten bzw. die Leuchtschichten 17, 21, 60 und 61 auf den Reflektoren 14 und 51 abgeordnet. Es kann jedoch auch vorgesehen werden, dass die elektrolumineszierenden Schichten 17, 21, 60 und 61 unter einer reflektierenden Schicht der Reflektoren 14 und 51 angeordnet sind. Dies hat den Vorteil, dass Reflektionseigenschaften der Reflektoren 14 und 51 im wesentlichen unabhängig von den Eigenschaften der elektrolumineszierenden Schichten bzw. der Leuchtschichten 17, 21, 60 und 61 sind. Ist vorgesehen, dass die elektrolumineszierenden Schichten bzw. die Leuchtschichten 17, 21, 60 und 61 unter einer reflektierenden Schicht der Reflektoren 14 und 51 angeordnet sind, ist die reflektierenden Schicht vorteilhafterweise als teiltransparente Schicht, insbesondere als venezianischer Spiegel ausgestaltet, der von den elektrolumineszierenden Schichten 17, 21, 60 und 61 erzeugtes Licht passieren lässt und von den Leuchtmitteln 11, 52 und 53 erzeugtes Licht reflektiert.

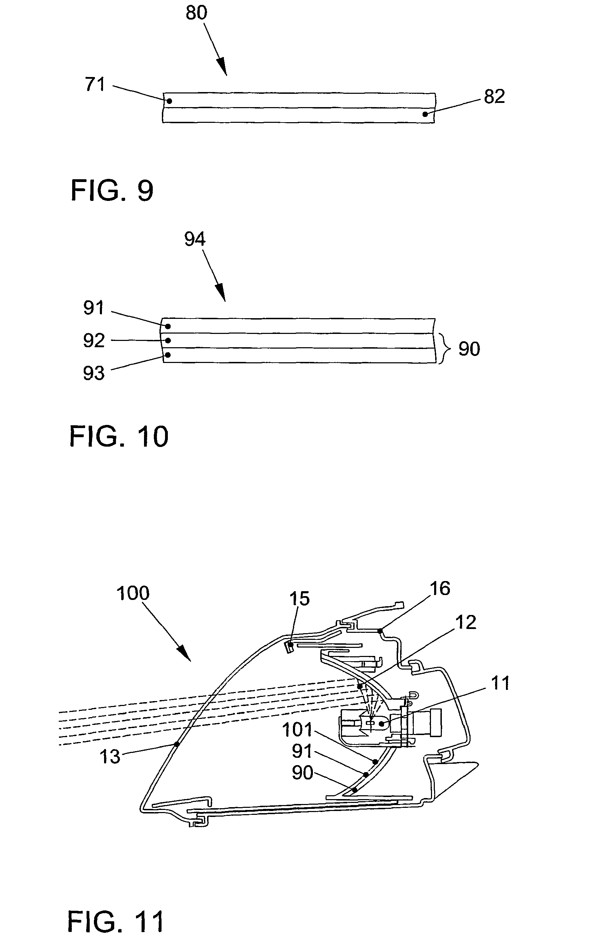

Fig. 9 zeigt einen Querschnitt durch ein weiteres Ausführungsbeispiel einer Leuchtschicht 80, insbesondere zur Verwendung als Leuchtschichten 17, 21, 60 und 61, mit einer elektrolumineszierenden Schicht 82, die entsprechend der elektrolumineszierenden Schicht 70 ausgestaltet sein kann. Dabei ist auf der elektrolumineszierenden Schicht 82 eine zumindest teiltransparente im wesentlichen aus Metall bestehende Schicht 81 angeordnet, die z.B. als aufgedampfte Aluminiumschicht ausgebildet ist. Dabei kann die Schicht 81 der vorgenannten reflektierenden Schicht der Reflektoren 14 und 51 entsprechen. Es kann auch vorgesehen sein, dass die Schicht 81 die Elektrode 71 ersetzt.

Fig. 10 zeigt einen Querschnitt durch ein weiteres Ausführungsbeispiel einer Leuchtschicht 90 in einem Scheinwerfer, der einen transparenten oder teiltransparenten Träger 91 mit einer Sichtseite 94 umfasst, wobei die Leuchtschicht 90 auf einer der Sichtseite 94 abgewandten Seite, also unterhalb, des Trägers 91 angeordnet ist. Die Leuchtschicht 90 kann entsprechend der Leuchtschicht 80 ausgestaltet sein. Die Leuchtschicht 90 weist eine elektrolumineszierende Schicht 93, die entsprechend der elektrolumineszierenden Schicht 70 ausgestaltet sein kann, und eine auf der elektrolumineszierenden Schicht 93 angeordnete zumindest teiltransparente im wesentlichen aus Metall bestehende Schicht 92 auf, die z.B. als aufgedampfte Aluminiumschicht ausgebildet ist. Es kann auch vorgesehen sein, dass die Schicht 92 die Elektrode 71 ersetzt.

Der Träger kann Teil der Reflektoren 14, 42 und/oder 51, der Blende 15, der Haltevorrichtung 44 und/oder der Linsenhalterung 46 und/oder 54 sein. Fig. 11 zeigt einen Querschnitt durch ein entsprechendes Ausführungsbeispiel eines Scheinwerfers 100, wobei der Scheinwerfer 100 ein alternatives Ausführungsbeispiel des Scheinwerfers 4 gemäß Fig. 4 darstellt, wobei gleiche Bezugszeichen mit Elementen aus Fig. 3 bzw. Fig. 4 gleiche Elemente bezeichnen. So weist der der Scheinwerfer 100 ein Gehäuse 16 auf, das mit einer Abdeckscheibe 13 verschlossen ist. In dem Gehäuse 16 sind ein Leuchtmittel 11 und ein Reflektor 101 zum Reflektieren von mittels des Leuchtmittels 11 erzeugbarem Licht 12 vorgesehen. Im oberen Bereich des Reflektors 101 weist der Scheinwerfer 100 eine Blende 15 auf.

Der Reflektor 101 umfasst den transparenten oder teiltransparenten Träger 91 und die Leuchtschicht 90, wobei die Leuchtschicht 90 unterhalb des Trägers 91 angeordnet ist. Die z.B. im wesentlichen aus aufgedampftem Aluminium bestehende Schicht 91 der Leuchtschicht 90 bildet dabei eine Schicht zum Reflektieren von mittels des Leuchtmittels 11 erzeugbarem Licht 12.

Die Elemente und Schichten in den Figuren sind unter Berücksichtigung von Einfachheit und Klarheit und nicht notwendigerweise maßstabsgetreu gezeichnet. So sind z.B. die Größenordnungen einiger Elemente bzw. Schichten deutlich übertrieben gegenüber anderen Elementen bzw. Schichten dargestellt, um das Verständnis der Ausführungsbeispiele der vorliegenden Erfindung zu erleichtern.

### BEZUGSZEICHENLISTE

- 1 2, 10, 20, 30,: Kraftfahrzeug
- 40, 50, 100: Scheinwerfer
- 3: Seitenspiegel
- 4, 7: Fahrtrichtungsanzeiger
- 5: Rückleuchte
- 6: Bremslicht
- 11, 41, 52, 53: Leuchtmittel
- 12: Licht
- 13, 57: Abdeckscheibe
- 14, 42, 51, 101: Reflektor
- 15: Blende
- 16 17, 21, 31, 45, 60, 61, 62, 63, 64, 80,: Gehäuse
- 90: Leuchtschicht
- 43, 56: Linse
- 44: Haltevorrichtung
- 46, 54: Linsenhalterung
- 70, 82, 93: elektrolumineszierende Schicht
- 71: Elektrode
- 72,74: Isolationsschicht
- 73: Pigmentschicht / Licht emittierende Schicht
- 75: Rückelektrode
- 81, 92: Schicht
- 91: Träger
- 94: Seite

## Patentansprüche

1. Scheinwerfer (2, 10, 20, 30, 40, 50, 100) oder Leuchte für ein Kraftfahrzeug (1) mit mindestens einem Leuchtmittel (11, 41, 52, 53) und mindestens einem Reflektor (14, 42, 51, 101) zum Reflektieren von mittels des Leuchtmittels (11, 41, 52, 53) erzeugbarem Licht, **dadurch gekennzeichnet, dass** der Scheinwerfer (2, 10, 20, 30, 40, 50, 100) oder die Leuchte zusätzlich eine mit dem Reflektor (14, 42, 51, 101) verbundene elektrolumineszierende Schicht (17, 21, 31, 45, 60, 61, 62, 63, 64, 70, 82, 93) aufweist, die auf einer der Sichtseite abgewandten Seite der reflektierenden Schicht angeordnet ist

2. Scheinwerfer (10, 20, 50) oder Leuchte nach Anspruch 1, **dadurch gekennzeichnet, dass** die elektrolumineszierende Schicht (17, 21, 60, 61, 82) auf dem Reflektor (14, 42, 51) angeordnet ist.

3. Scheinwerfer (10, 20, 50, 100) oder Leuchte nach Anspruch 1 oder 2, **dadurch gekennzeichnet, dass** die reflektierende Schicht (81, 92) Metall aufweist.

4. Scheinwerfer (10, 20, 50, 100) oder Leuchte nach Anspruch 3, **dadurch gekennzeichnet, dass** die reflektierende Schicht (81, 92) im wesentlichen aus einer zumindest teiltransparenten Schicht aus Metall besteht.

5. Scheinwerfer (30) oder Leuchte nach einem der vorhergehenden Ansprüche, wobei der Scheinwerfer (30) mindestens eine Blende (15) umfasst, **dadurch gekennzeichnet, dass** die elektrolumineszierende Schicht (31, 70, 82, 93) mit der Blende (15) verbunden ist.

6. Scheinwerfer (30) oder Leuchte nach Anspruch 5, **dadurch gekennzeichnet, dass** die elektrolumineszierende Schicht (31, 70, 82, 93) auf oder unter der Blende (15) angeordnet ist

7. Scheinwerfer (40) oder Leuchte nach einem der vorhergehenden Ansprüche, wobei der Scheinwerfer (40) oder die Leuchte eine Haltevorrichtung (44) zum Halten des Leuchtmittels (41) umfasst, **dadurch gekennzeichnet, dass** die elektrolumineszierende Schicht (45, 70, 82, 93) mit der Haltevorrichtung (44) verbunden ist.

8. Scheinwerfer (40) oder Leuchte nach Anspruch 7, **dadurch gekennzeichnet, dass** die elektrolumineszierende Schicht (45, 70, 82, 93) auf oder unter der Haltevorrichtung (44) angeordnet ist

9. Scheinwerfer (50) oder Leuchte nach einem der vorhergehenden Ansprüche, wobei der Scheinwerfer (50) oder die Leuchte eine Linse (56) zum Sammeln oder Streuen des mittels eines Leuchtmittels (53) erzeugbaren Lichtes sowie eine Linsenhalterung (54) zum Halten der Linse (56) umfasst, **dadurch gekennzeichnet, dass** die elektrolumineszierende Schicht (62, 63, 64, 70, 82, 93) mit der Linsenhalterung (54) verbunden ist

10. Scheinwerfer (50) oder Leuchte nach Anspruch 9, **dadurch gekennzeichnet, dass** die elektrolumineszierende Schicht (62, 63, 64, 70, 82, 93) auf oder unter der Linsenhalterung (54) angeordnet ist

11. Scheinwerfer (2, 10, 20, 40, 50) oder Leuchte nach einem der vorhergehenden Ansprüche, **dadurch gekennzeichnet, dass** die elektrolumineszierende Schicht (17, 21, 45, 60, 61, 62, 63, 64, 70, 82, 93) zumindest bereichsweise mit einem Krümmungsradius von weniger als 10cm gekrümmt ist

12. Scheinwerfer (2, 10, 20, 30, 40, 50, 100) oder Leuchte nach einem der vorhergehenden Ansprüche, **dadurch gekennzeichnet, dass** die elektrolumineszierende Schicht (17, 21, 31, 45, 60, 61, 62, 63, 64, 70, 82, 93) als Einheit eine Fläche von mehr als 1mm² umfasst.

13. Scheinwerfer (100) oder Leuchte nach einem der vorhergehenden Ansprüche, **dadurch gekennzeichnet, dass** der Scheinwerfer (100) oder die Leuchte einen transparenten oder teiltransparenten Träger (91) mit einer Sichtseite (94) umfasst, wobei die elektrolumineszierende Schicht (93) auf einer der Sichtseite (94) abgewandten Seite des Trägers (91) angeordnet ist.

14. Scheinwerfer (100) oder Leuchte nach Anspruch 13, **dadurch gekennzeichnet, dass** zwischen dem Träger (91) und der elektroiumineszierenden Schicht (93) eine zumindest telltransparente im wesentlichen aus Metall bestehende Schicht (92) angeordnet ist

15. Scheinwerfer (2, 10, 20, 30, 40, 50, 100) oder Leuchte nach Anspruch 3, 4 oder 14, **dadurch gekennzeichnet, dass** das Metall Aluminium oder Chrom umfasst.

16. Scheinwerfer (2, 10, 20, 30, 40, 50, 100) oder Leuchte nach Anspruch 15, **dadurch gekennzeichnet, dass** das Metall aufgedampftes Aluminium umfasst.

17. Scheinwerfer (2, 10, 20, 30, 40, 50, 100) oder Leuchte nach Anspruch 15, **dadurch gekennzeichnet, dass** das Metall im wesentlichen aus aufgedampftem Aluminium besteht.

18. Kraftfahrzeug (1), **dadurch gekennzeichnet, dass** es einen Scheinwerfer (2, 10, 20, 30, 40, 50, 100) oder eine Leuchte nach einem der vorhergehenden Ansprüche aufweist

19. Kraftfahrzeug (1) nach Anspruch 18, **dadurch gekennzeichnet, dass** die elektrotumineszierende Schicht (17, 21, 31, 45, 60. 61, 62, 63, 64, 70, 82, 93) unabhängig von einem Fern-, Abblend- und/oder Parklicht schaltbar ist.

## Claims

1. Headlight (2, 10, 20, 30, 40, 50, 100) or light for a motor vehicle (1) having at least one illuminating means (11, 41, 52, 53) and at least one reflector (14, 42, 51, 101) for reflecting light that can be generated by means of the illuminating means (11, 41, 52, 53), **characterized in that** the headlight (2, 10, 20, 30, 40, 50, 100) or the light additionally has an electroluminescent layer (17, 21, 31, 45, 60, 61, 62, 63, 64, 70, 82, 93) which is connected to the reflector (14, 42, 51, 101), and arranged on a side of the reflecting layer averted from the visible layer.

2. Headlight (10, 20, 50) or light according to Claim 1, **characterized in that** the electroluminescent layer (17, 21, 60, 61, 82) is arranged on the reflector (14, 42, 51).

3. Headlight (10, 20, 50, 100) or light according to Claim 1 or 2, **characterized in that** the reflecting layer (81, 92) contains metal.

4. Headlight (10, 20, 50, 100) or light according to Claim 3, **characterized in that** the reflecting layer (81, 92) consists substantially of an at least partially transparent layer of metal.

5. Headlight (30) or light according to one of the preceding Claims, the headlight (30) comprising at least one diaphragm (15), **characterized in that** the electroluminescent layer (31, 70, 82, 93) is connected to the diaphragm (15).

6. Headlight (30) or light according to Claim 5, **characterized in that** the electroluminescent layer (31, 70, 82, 93) is arranged on or below the diaphragm (15).

7. Headlight (40) or light according to one of the preceding Claims, the headlight (40) or the light comprising a holding device (44) for holding the illuminating means (41), **characterized in that** the electroluminescent layer (45, 70, 82, 93) is connected to the holding device (44).

8. Headlight (40) or light according to Claim 7, **characterized in that** the electroluminescent layer (45, 70, 82, 93) is arranged on or below the holding device (44).

9. Headlight (50) or light according to one of the preceding Claims, the headlight (50) or the light comprising a lens (56) for collecting or scattering the light that can be generated by means of an illuminating means (53), as well as a lens holder (54) for holding the lens (56), **characterized in that** the electroluminescent layer (62, 63, 64, 70, 82, 93) is connected to the lens holder (54).

10. Headlight (50) or light according to Claim 9, **characterized in that** the electroluminescent layer (62, 63, 64, 70, 82, 93) is arranged on or below the lens holder (54).

11. Headlight (2, 10, 20, 40, 50) or light according to one of the preceding Claims, **characterized in that** the electroluminescent layer (17, 21, 45, 60, 61, 62, 63, 64, 70, 82, 93) is curved at least in part with a radius of curvature of less than 10 cm.

12. Headlight (2, 10, 20, 30, 40, 50, 100) or light according to one of the preceding Claims, **characterized in that** as a unit the electroluminescent layer (17, 21, 31, 45, 60, 61, 62, 63, 64, 70, 82, 93) covers an area of more than 1 mm².

13. Headlight (100) or, light according to one of the preceding Claims, **characterized in that** the headlight (100) or the light comprises a transparent or partially transparent carrier (91) with a visible side (94), the electroluminescent layer (93) being arranged on a side of the carrier (91) averted from the visible side (94).

14. Headlight (100) or light according to Claim 13, **characterized in that** arranged between the carrier (91) and the electroluminescent layer (93) is an at least partially transparent layer (92) consisting substantially of metal.

15. Headlight (2, 10, 20, 30, 40, 50, 100) or light according to Claim 3, 4 or 14, **characterized in that** the metal comprises aluminum or chromium.

16. Headlight (2, 10, 20, 30, 40, 50, 100) or light according to Claim 15, **characterized in that** the metal comprises vapor-deposited aluminum.

17. Headlight (2, 10, 20, 30, 40, 50, 100) or light according to Claim 15, **characterized in that** the metal consists substantially of vapor-deposited aluminum.

18. Motor vehicle (1), **characterized in that** it has a headlight (2, 10, 20, 30, 40, 50, 100) or a light according to one of the preceding Claims.

19. Motor vehicle (1) according to Claim 18, **characterized in that** the electroluminescent layer (17, 21, 31, 45, 60, 61, 62, 63, 64, 70, 82, 93) can be switched independently of a high beam, low beam and/or parking light.

## Revendications

1. Phare (2, 10, 20, 30, 40, 50, 100) ou lampe pour un véhicule automobile (1) comprenant au moins un moyen éclairant (11, 41, 52, 53) et au moins un réflecteur (14, 42, 51, 101) pour réfléchir la lumière pouvant être produite au moyen du moyen éclairant (11, 41, 52, 53), **caractérisé en ce que** le phare (2, 10, 20, 30, 40, 50, 100) ou la lampe présente en outre une couche électroluminescente (17, 21, 31, 45, 60, 61, 62, 63, 64, 70, 82, 93) connectée au réflecteur (14, 42, 51, 101), qui est disposée sur un côté de la couche réfléchissante opposé au côté visible.

2. Phare (10, 20, 50) ou lampe selon la revendication 1, **caractérisé en ce que** la couche électroluminescente (17, 21, 60, 61, 82) est disposée sur le réflecteur (14, 42, 51).

3. Phare (10, 20, 50, 100) ou lampe selon la revendication 1 ou 2, **caractérisé en ce que** la couche réfléchissante (81, 92) présente du métal.

4. Phare (10, 20, 50, 100) ou lampe selon la revendication 3, **caractérisé en ce que** la couche réfléchissante (81, 92) se compose essentiellement d'une couche de métal au moins partiellement transparente.

5. Phare (30) ou lampe selon l'une quelconque des revendications précédentes, dans lequel le phare (30) comprend au moins un bandeau (15), **caractérisé en ce que** la couche électroluminescente (31, 70, 82, 93) est connectée au bandeau (15).

6. Phare (30) ou lampe selon la revendication 5, **caractérisé en ce que** la couche électroluminescente (31, 70, 82, 93) est disposée sur ou sous le bandeau (15).

7. Phare (40) ou lampe selon l'une quelconque des revendications précédentes, dans lequel le phare (40) ou la lampe comprend un dispositif de fixation (44) pour retenir le moyen éclairant (41), **caractérisé en ce que** la couche électroluminescente (45, 70, 82, 93) est connectée au dispositif de fixation (44).

8. Phare (40) ou lampe selon la revendication 7, **caractérisé en ce que** la couche électroluminescente (45, 70, 82, 93) est disposée sur ou sous le dispositif de fixation (44).

9. Phare (50) ou lampe selon l'une quelconque des revendications précédentes, dans lequel le phare (50) ou la lampe comprend une lentille (56) pour concentrer ou disperser la lumière pouvant être produite au moyen d'un moyen éclairant (53) ainsi qu'une fixation de lentille (54) pour fixer la lentille (56), **caractérisé en ce que** la couche électroluminescente (62, 63, 64, 70, 82, 93) est connectée à la fixation de lentille (54).

10. Phare (50) ou lampe selon la revendication 9, **caractérisé en ce que** la couche électroluminescente (62, 63, 64, 70, 82, 93) est disposée sur ou sous la fixation de lentille (54).

11. Phare (2, 10, 20, 40, 50) ou lampe selon l'une quelconque des revendications précédentes, **caractérisé en ce que** la couche électroluminescente (17, 21, 45, 60, 61, 62, 63, 64, 70, 82, 93) est courbée au moins en partie avec un rayon de courbure de moins de 10 cm.

12. Phare (2, 10, 20, 30, 40, 50, 100) ou lampe selon l'une quelconque des revendications précédentes, **caractérisé en ce que** la couche électroluminescente (17, 21, 31, 45, 60, 61, 62, 63, 64, 70, 82, 93) comprend en tant qu'unité une surface de plus de 1 mm².

13. Phare (100) ou lampe selon l'une quelconque des revendications précédentes, **caractérisé en ce que** le phare (100) ou la lampe comprend un support transparent ou partiellement transparent (91) avec un côté visible (94), la couche électroluminescente (93) étant disposée sur un côté du support (91) opposé au côté visible (94).

14. Phare (100) ou lampe selon la revendication 13, **caractérisé en ce que** l'on dispose entre le support (91) et la couche électroluminescente (93) une couche (92) au moins partiellement transparente constituée essentiellement de métal.

15. Phare (2, 10, 20, 30, 40, 50, 100) ou lampe selon les revendications 3, 4 ou 14, **caractérisé en ce que** le métal comprend de l'aluminium ou du chrome.

16. Phare (2, 10, 20, 30, 40, 50, 100) ou lampe selon la revendication 15, **caractérisé en ce que** le métal comprend de l'aluminium vaporisé.

17. Phare (2, 10, 20, 30, 40, 50, 100) ou lampe selon la revendication 15, **caractérisé en ce que** le métal se compose essentiellement d'aluminium vaporisé.

18. Véhicule automobile (1) **caractérisé en ce qu'**il présente un phare (2, 10, 20, 30, 40, 50, 100) ou une lampe selon l'une quelconque des revendications précédentes.

19. Véhicule automobile (1) selon la revendication 18, **caractérisé en ce que** la couche électroluminescente (17, 21, 31, 45, 60, 61, 62, 63, 64, 70, 82, 93) peut être commutée indépendamment d'un feu de route, d'un feu de croisement et/ou d'un feu de stationnement.
